# EUROPEAN PATENT APPLICATION

(11) **EP 1 603 225 A1**
(43) Date of publication of application: **07.12.2005**
(21) Application number: 04719070.7
(22) Date of filing: 10.03.2004
(51) Int. Cl.: H02P 9/04

(54) **POWER SUPPLY FOR VEHICLE**

(30) Priority: 13.03.2003 JP 2003067991
(71) Applicant: HONDA MOTOR CO., Ltd., Tokyo 107-8556 (JP)
(72) Inventor: TAMAKI, Kenji, c/o K.K. Honda Gijutsu Kenkyusho, Wako-shi, Saitama 351-0193 (JP)
(74) Representative: Herzog, Markus
(86) International application number: PCT/JP2004/003098
(87) International publication number: WO 2004/082124

(57) **Abstract**

A vehicle electrical power supply apparatus installed in a vehicle including an internal combustion engine, as a drive source, having a fuel injection device (26), and an electrical load (19, 70). The vehicle electrical power supply apparatus includes a battery (16) that supplies electrical power to the electrical loads (19, 70), an alternating current generator (11) that charges the battery (16) with electrical power and supplies electrical power to the electrical loads (19, 70), and an electrical power supply device (12) that supplies electrical power output from the alternating current generator (11) to the fuel injection device (26) so as to operate the fuel injection device (26).

## Description

### FIELD OF THE INVENTION

The present invention relates to a vehicle electrical power supply apparatus. Priority is claimed on Japanese Patent Application No. 2003-67991, filed March 13, 2003, the content of which is incorporated herein by reference.

### DESCRIPTION OF RELATED ART

Conventionally, an electrical power supply device for a vehicle is known (for example, refer to Japanese Unexamined Patent Application, First Publication No. 2002-98032) in which, when starting an internal combustion engine by using an alternating current generator that can be rotated, for example, by a kicking action by the operator, the connection between the alternating current generator and the battery is interrupted, and the generated power of the alternating current generator is supplied to the fuel supply system (fuel pump) and parts of the ignition system, without being supplied to the battery.

However, in the electrical power supply device for a vehicle according to this conventional technology, when starting the internal combustion engine by the generated power of an alternating current generator, if the strength of the kicking action of the operator is relatively weak, for example, there is the concern that provision of the power necessary to start the internal combustion engine cannot be ensured.

### DISCLOSURE OF THE INVENTION

In consideration of the problem described above, it is an object of the present invention to provide a vehicle electrical power supply apparatus that can further improve the start-up performance of the internal combustion engine easily even in the case, for example, in which the strength of the kicking action of the operator is relatively weak.

In order to attain the object to solve the problem described above, the present invention provides a vehicle electrical power supply apparatus installed in a vehicle including: an internal combustion engine, as a drive source, having a fuel injection device; and an electrical load; the vehicle electrical power supply apparatus including: a battery that supplies electrical power to the electrical load; an alternating current generator that charges the battery with electrical power and supplies electrical power to the electrical load; and an electrical power supply device that supplies electrical power output from the alternating current generator to the fuel injection device so as to operate the fuel injection device.

According to the vehicle electrical power supply apparatus described above, even in the case in which the state of the battery is abnormal and the state of the charge of the battery does not attain a predetermined state, it is possible to rotate the alternating current generator by the kicking action of the operator and the like, and it is possible to operate the fuel injection device by the electrical power output from this alternating current generator.

The present invention further provides a vehicle electrical power supply apparatus installed in a vehicle including an internal combustion engine, as a drive source; and an electrical load; the vehicle electrical power supply apparatus including: a battery that supplies electrical power to the electrical load; an alternating current generator that charges the battery with electrical power and supplies electrical power to the electrical load; and a capacitor that accumulates the electrical power output from the alternating current generator during a kicking start-up operation in which the alternating current generator is rotated by a kicking action of an operator.

According to the vehicle electrical power supply apparatus having the structure described above, an alternating current waveform power output from the alternating current generator due to the kicking action of the operator accumulates, for example, in the capacitor after being rectified to a direct current waveform power. In addition, the electrical power supply can be further improved by supplying electrical power from this capacitor to a fuel supply system including a control device that controls the fuel supply and a fuel injection device and the like.

The present invention further provides a vehicle electrical power supply apparatus installed in a vehicle including: an internal combustion engine, as a drive source, having a fuel injection device; and an electrical load; the vehicle electrical power supply apparatus including: a battery that supplies electrical power to the electrical load; an alternating current generator that charges the battery with electrical power and supplies electrical power to the electrical load; an interrupt device that interrupts the supply of electrical power from the alternating current generator to the battery when a state of charge of the battery does not attain a predetermined state; and an electrical power supply device that supplies electrical power output from the alternating current generator to the fuel injection device so as to operate the fuel injection device.

According to the vehicle electrical power supply apparatus having the structure described above, even in the case, for example, in which the state of the charge of the battery has not attained a predetermined state, it is possible to prevent the generated electrical power output from the alternating current generator, depending on the kicking action of the operator or the like, from being supplied to the battery, and it is possible to operate the fuel injection device by the generated electrical power output from the alternating current generator.

### BRIEF DESCRIPTION OF THE DRAWINGS

FIG 1 is a structural diagram of a vehicle electrical power supply apparatus according to an embodiment of the present invention.
FIG. 2 is a flowchart showing the operation of the vehicle electrical power supply apparatus shown in FIG. 1 and in particular shows the processing in which a load control relay is switched ON and OFF.
FIG. 3, PARTS (A) to (F) are graphs showing in sequence the changes through time of the PC signal, the voltage of the injector, the voltage of the ignition, the FI system voltage, the engine rotation speed, and the fuel pressure, during the start-up of the internal combustion engine.

### PREFERRED EMBODIMENTS OF THE INVENTION

Below, an embodiment of the vehicle electrical power supply apparatus of the present invention will be explained with reference to the attached figures.

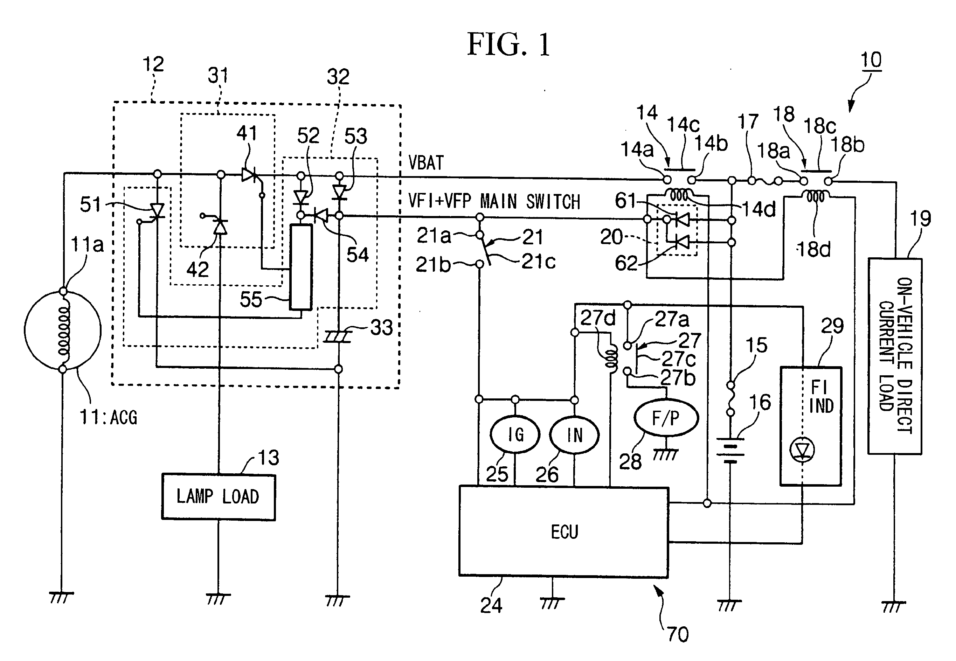

The vehicle electrical power supply apparatus 10 according to the present embodiment is installed, for example, in a motorcycle, as an example of a vehicle. The vehicle electrical power supply apparatus 10 includes, as shown in FIG 1 for example, an alternating current generator (ACG) 11; a rectifier/voltage control circuit (REG/REC; regulator/rectifier) 12; a lamp load 13; a battery control relay 14; a main fuse 15; a battery 16; a sub-fuse 17; a load control relay 18; a on-vehicle direct current load 19; a countercurrent preventing circuit 20; a main switch 21; ECU (electronic control unit) 24; an ignition (IG) 25; an injector (IN) 26; a fuel pump relay 27; a fuel pump (F/P) 28; and a meter 29.

The alternating current generator 11 can be rotated, for example, by being connected to an internal combustion engine (not shown), and can be rotated by the kicking action of the operator or the like, and among the two terminals provided in the alternating current generator 11, one terminal is grounded, the other terminal serves as the output terminal 11a, and an alternating current waveform power is output from the output terminal 11a.

The rectifier/voltage control circuit 12 includes, for example, a rectifier circuit 31, an excess voltage protection circuit 32, and a capacitor 33.

The rectifier circuit 31 converts the alternating current waveform power output from the alternating current generator 11 using, for example, half-wave rectification, to a direct current waveform power, and outputs the direct current waveform power, and includes, for example, a first switching element 41 and a second switching element 42, consisting of thyristors or the like.

In addition, the anode of the first switching element 41 and the cathode of the second switching element 42 are connected to the output terminal 11a of the alternating current generator 11, and the anode of the second switching element 42 is, for example, connected to a lamp load 13 such as a headlight.

The excess voltage preventing circuit 32 prevents the application to a on-vehicle electrical device of an excessively high voltage output from the alternating current generator 11 that is driven by the internal combustion engine, for example, during the working operation after start-up of the internal combustion engine, and for example, includes a third switching element 51 consisting of a thyristor or the like, a first diode 52, a second diode 53, a third diode 54, and a voltage measuring circuit 55.

In addition, between the first switching element 41 and the second switching element 42 of the rectifier circuit 31, the anode of the third switching element 51 is connected to the output terminal 11a of the alternating current generator 11, and the cathode is grounded.

In addition, the anodes of the first diode 52 and the second diode 53 are connected to the cathode of the first switching element 41 of the rectifier circuit 31, and furthermore, the cathode of the second diode 53 is connected to the anode of the third diode 54, and the cathode of the third diode 54 is connected to the cathode of the first diode 52.

In addition, the cathodes of the first diode 52 and the third diode 54 are connected to the voltage measuring circuit 55.

The voltage measuring circuit 55 measures the voltage output from the cathodes of the first diode 52 and the third diode 54, that is, the voltage output from the rectifier circuit 31, and gate signals are output to each of the gates of the first switching element 41 and the third switching element 51 of the rectifier circuit 31 in order to control the ON/OFF switching of the first switching element 41 and the third switching element 51 such that this voltage becomes equal to or less than a predetermined voltage (e.g., a peak voltage of 15.0±0.5V, and an effective voltage of 14.5±0.5V or the like).

In addition, for example, while the vehicle is stopped, the voltage measuring circuit 55 measures the voltage between the terminals of the battery 16, and gate signals can be output in order to control the ON/OFF switching of the first switching element 41 and the third switching element 51 depending on the results of this measurement.

In addition, the capacitor 33 consisting, for example, of an electrolytic capacitor or the like is disposed between the cathode of the second diode 53 and the cathode of the grounded third switching element 51.

In the rectification/voltage control circuit 12, in the alternating current waveform power output from the alternating current generator 11, a negative half-wave is supplied to a lamp load 13 via the second switching element 42, a positive half-wave is supplied to the on-vehicle electrical equipment via the first switching element 41, and these are accumulated in the capacitor 33.

In addition, for example, the first switching element 41 is turned ON during the start-up of the internal combustion engine, and the third switching element 51 is turned OFF, and it is possible thereby to supply to on-vehicle electrical equipment a direct current waveform power, which is the half-wave rectified alternating half-wave rectified current output from the alternating current generator 11.

Furthermore, in the case in which, for example, the voltage measured at voltage measuring circuit 55 exceeds a predetermined voltage during the working operation after start-up of the internal combustion engine, the first switching element 41 is turned OFF, the third switching element 51 is turned ON, and a direct current waveform power, which is the half-wave rectified alternating current waveform power that has been output from the alternating current generator 11, can be discharged to an external part.

Furthermore, for example, during the start-up of the internal combustion engine and while power is being conducted to the ignition 25 that carries out the ignition action in the internal combustion engine, direct current waveform power accumulated in the capacitor 33 can be supplied to the on-vehicle electrical devices.

The anode of the second diode 53 of the excess voltage protection circuit 32 is connected to the main fuse 15 and the sub-fuse 17 via the battery control relay 14.

The battery control relay 14 is formed by providing, for example, a first stationary contact 14a that is connected to the anode of the second diode 53 of the excess voltage protection circuit 32, a second stationary contact 14b that is connected to the main fuse 15 and the sub-fuse 17, a first movable contact 14c that can connect (ON)/interrupt (OFF) the first stationary contact 14a and the second stationary contact 14b under control of the ECU 24 described below, and a first coil 14d that displaces the first stationary contact 14c.

As will be described below, the battery control relay 14 interrupts the electrical power supply from the rectifier/voltage control circuit 12 to the battery 16 connected via the main fuse 15, for example, during the start-up of the internal combustion engine.

Furthermore, the sub-fuse 17 is connected to the on-vehicle direct current load 19 consisting, for example, of a horn, blinker, a brake light, or the like, via the load control relay 18.

The load control relay 18 is formed by providing, for example, a third stationary contact 18a connected to the second stationary contact 14b of the battery control relay 14, a fourth stationary contact 18b connected to the on-vehicle direct current load 19, a second movable contact 18c that can connect (ON)/interrupt (OFF) the third stationary contact 18a and the fourth stationary contact 18b under the control of an ECU 24 described below, and a second coil 18d that displaces the second movable contact 18c.

As will be described below, the load control relay 18 interrupts the electric power supply from the rectifier/voltage control circuit 12 to the on-vehicle direct current load 19 during, for example, the start-up of the internal combustion engine.

In addition, the cathode of the second diode 53 of the excess voltage protection circuit 32 is connected via the countercurrent preventing circuit 20 to the second stationary contact 14b of the battery control relay 14, that is, connected to the main fuse 15 and the battery 16.

The countercurrent preventing circuit 20 is formed by providing a fifth diode 61 and a sixth diode 62. The anodes of the fifth diode 61 and the sixth diode 62 are connected to the main fuse 15, and the cathodes of the same are connected to the cathode of the second diode 53 of the excess voltage protection circuit 32 and the main switch 21.

Specifically, the countercurrent preventing circuit 20 interrupts the electric power supply from the rectifier/voltage control circuit 12 to the battery 16 via the countercurrent preventing circuit 20, and as will be described below, allows the supply of electrical power from the battery 16 to the main switch 21 when, for example, the state of the battery 16 is normal.

Moreover, each of the coils 14d and 18d of the battery control relay 14 and the load control relay 18, respectively, described above are connected to the cathodes of the fifth diode 61 and the sixth diode 62 of the countercurrent preventing circuit 20, and can be supplied with electrical power from the rectifier/voltage control circuit 12 and the battery 16.

In addition, the main switch 21 is connected to a fuel supply system 70 that includes, for example, the ECU 24, the ignition 25, the injector 26, the fuel pump relay 27, the fuel pump 28, and the meter 29.

The main switch 21 includes, for example, a fifth stationary contact 21a that is connected to the cathodes of the fifth diode 61 and the sixth diode 62 of the countercurrent preventing circuit 20 and to the cathode of the second diode 53 of the excess voltage protection circuit 32, a sixth stationary contact 21b, and a third movable contact 21c that connects the fifth stationary contact 21a to the sixth stationary contact 21b during, for example, the start-up of the internal combustion engine due to the action of the operator, and disconnects the fifth stationary contact 21a from the sixth stationary contact 21b while the vehicle is stopped.

In addition, the sixth stationary contact 21b is connected to the ECU 24, to the ignition 25 that carries out the ignition action in the internal combustion engine, to the injector 26 that injects and supplies fuel into the internal combustion engine, to the fuel pump relay 27, and to the meter 29 that indicates whether the state of the fuel supply system 70 is normal or abnormal.

Moreover, the fuel pump relay 27 includes, for example, a ninth stationary contact 27a that is connected to sixth stationary contact 21b, a tenth stationary contact 27b that is connected to the fuel pump 28, a fifth movable contact 27c that connects (ON) the ninth stationary contact 27a to the tenth stationary contact 27b and disconnects (OFF) the ninth stationary contact 27a from the tenth stationary contact 27b under control of the ECU 24, which will be described below, and a fourth coil 27d that displaces the fifth movable contact 27c. Moreover, the fourth coil 27d is connected to the ninth stationary contact 27a, and can receive electrical power from the rectifier/voltage control circuit 12 or from the battery 16, via the switch 21.

In addition to the case in which, for example, the vehicle has stopped, the fuel pump relay 27 may interrupt the electrical power supply from the rectifier/voltage control circuit 12 and the battery 16 to the fuel pump 28 during predetermined states set in the ECU 24

The ECU 24 controls the turning ON/OFF of the battery control relay 14, of the load control relay 18, and of the fuel pump relay 27 depending, for example, on the state of the vehicle.

For example, in the case in which the state of the battery is normal during the start-up of the internal combustion engine, the ECU 24 turns ON the battery control relay 14, the load control relay 18, and the fuel pump relay 27. In this state, for example, when the main switch 21 is turned ON by the action of the operator, the fuel supply system 70 is activated by the electrical power from the battery 16.

Thereby, the crankshaft of the internal combustion engine is rotated by the start-up motor (not shown) which is rotated by the kicking action of the operator to the alternating current generator 11, or by the power supply from the battery 16, and the internal combustion engine is started upon the fuel supply by the fuel supply system 70 and the ignition action.

In addition, in the case in which, for example, the state of the battery is abnormal during the start-up of the internal combustion engine, or in the case in which the state of the charge of the battery 16 does not attain a predetermined state, the ECU 24, for example, turns OFF the battery control relay 14 and the load control relay 18. In this state, when, for example, the main switch 21 is turned ON by the action of the operator, the fuel supply system 70 is activated by direct current waveform power, which is the rectified alternating current waveform power of the alternating current generator 11 generated by the kicking action of the operator.

Then, at this time, by accumulating the direct current waveform power in the capacitor 33 of the rectifier/voltage control circuit 12, it is possible to stably supply electric power to the fuel supply system 70.

Below, as an example of the action of the ECU 24, the operation in which, for example, the load control relay 18 is switched ON/OFF will be explained.

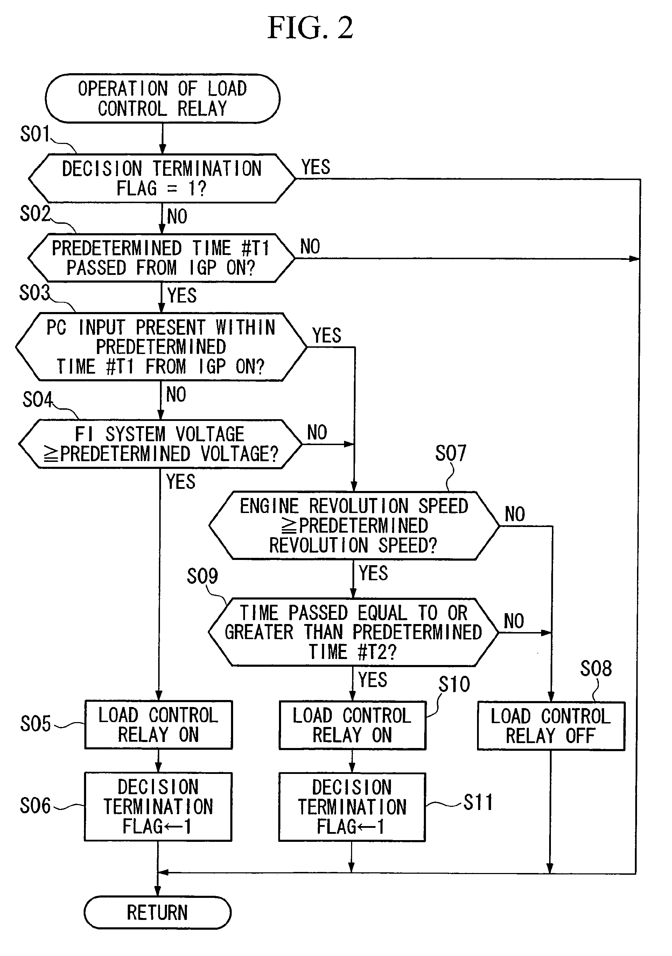

For example, in step S01 shown in FIG. 2, it is determined whether or not the flag value of a decision termination flag is set to "1".

When the result of the determination is "YES", the sequence of operations ends.

In contrast, when the result of the determination is "NO", the operation proceeds to step S02.

Note that the flag value of the decision termination flag is reset to zero during a stoppage in the operation of the internal combustion engine or during the start-up of the electric power supply to the ECU 24.

In step S02, it is determined whether or not a time period which is equal to or greater than a predetermined time #T1 (e.g., 110 ms or the like) has passed since the start-up of the electric power supply (IGP ON) to the ECU 24.

When the result of the determination is "NO", the sequence of operations ends.

In contrast, when the result of the operation is "YES", the operation proceeds to step S03.

In step S03, it is determined whether or not, for example, over a predetermined time period #T1 (e.g., 110 ms or the like) that begins at the start-up of the electric power supply (IGP ON) to the ECU 24 unit, the PC signal that indicates that, for example, the revolution speed of the internal combustion engine (engine revolution speed) is equal to or greater than a predetermined revolution speed (e.g., 60 rpm or the like) is input. Note that the PC signal is a pulsed signal, for example, for measuring the engine revolution speed and for sensing the clutch position.

When the result of the determination is "YES", the operation proceeds to step S07, which will be described below.

In contrast, when the result of the determination is "NO", the operation proceeds to step S04.

In step S04, it is determined whether or not the FI system voltage supplied to the fuel supply system 70 is equal to or greater than a predetermined voltage (e.g., 9 V or the like).

When the result of the determination is "NO", the operation proceeds to step S07, which will be described below.

In contrast, when the result of the determination is "YES", the operation proceeds to step S05.

In step S05, the load control relay 18 is turned "ON", and the operation proceeds to step S06. In step S06, the flag value of the decision termination flag is set to "1", and the sequence of operations ends.

Then in step S07, it is determined whether or not the revolution speed of the internal combustion engine (engine revolution speed) is equal to or greater than a predetermined revolution speed (e.g., 1200 rpm or the like).

When the result of the determination is "NO", the operation proceeds to step S08, the load control relay is turned "OFF", and the sequence of operations ends.

In contrast, when the result of the determination is "YES", the operation proceeds to step S09.

In step S09, it is determined whether or not the state in which the engine revolution speed is maintained to be equal to or greater than the predetermined revolution speed (e.g., 1200 rpm or the like) has continued for a time period which is equal to or greater than the predetermined time #T2 (e.g., 2 seconds or the like).

When the result of the determination is "NO", the operation proceeds to step S08 described above.

In contrast, when the result of the determination is "YES", the operation proceeds to step S 10, the load control relay 18 is turned ON, and the operation proceeds to step S11. In step S11, the flag value of the decision termination flag is set to "1", and the sequence of operations ends.

Specifically, when the state of the battery is abnormal and the charge state does not attain a predetermined state, the load control relay 18 is turned OFF if the state in which the engine revolution speed, that is, amount of generated electrical power at the alternating current generator 11 due to the kicking action of the operator is less than a predetermined amount, has continued for a time period that is equal to or greater than a predetermined time interval, so that the desired electrical power is supplied to the fuel supply system 70. In contrast, when the internal combustion engine starts and the amount of electrical power generated by the alternating current generator 11 is equal to or greater than a predetermined amount, the load control relay 18 is turned ON so that the electric power is supplied to the fuel supply system 70 and the on-vehicle direct current load 19.

Below, experimental results of tests in which the internal combustion engine of a motorcycle was started by using the vehicle electrical power supply apparatus 10 according to the present embodiment will be explained.

First, the results of tests in which the internal combustion engine was started by the one kicking action of the operator at the alternating current generator 11 will be explained for the case, for example, in which the state of the battery 16 was abnormal and starting the fuel supply system 70 by the electric power supplied from the battery 16 was difficult.

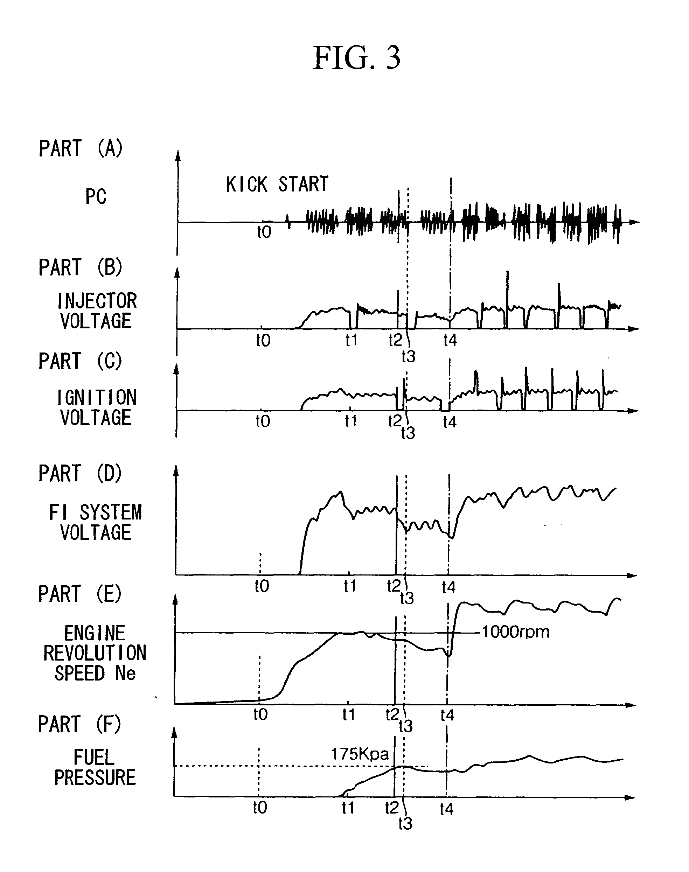

When one kicking action was started at time t0 shown in PART (A) of FIG 3, accompanying the execution of this kicking action, the PC signal that indicates that the engine revolution speed is equal to or greater than a predetermined revolution speed (e.g., 60 rpm or the like) was output. At the same time, as shown in PART (E) of FIG. 3, the engine revolution speed "Ne" tended to increase, and as shown in PART (D) of FIG. 3, the FI system voltage supplied from the rectifier/voltage control circuit 12 to the fuel supply system 70 tended to increase.

Then, when the engine revolution speed "Ne" attained a predetermined revolution speed "#Ne" (e.g., 1000 rpm or the like), as at time t1 shown in PART (E) of FIG 3, the injector 26 started fuel injection at an appropriate timing, as shown in PART (B) in FIG 3.

Then, after the ignition (preliminary ignition) at the top dead center of the exhaust cycle by the ignition 25 was executed, as at time t2 shown in PART (C) in FIG 3, when the pressure of the fuel (fuel pressure) supplied from the fuel pump 28 to the fuel injection valve (not shown) attained a predetermined pressure (e.g., 175 kPa or the like), as at time t3 shown in PART (F) of FIG. 3, the injector 26 injected fuel, as shown in PART (B) of FIG 3. Subsequently, the internal combustion engine started due to the ignition (primary ignition) by the ignition 25 at time t4 shown in PART (C) in FIG 3, the engine revolution speed "Ne" increased as shown in PART (E) in FIG. 3, and the FI system voltage increased as shown in PART (D) in FIG 3.

Note that the kicking action of the operation at the alternating current generator 11 was a "weak kick" in which rotation drive force on the crankshaft was a relatively weak (e.g., the peak value of the engine rotation speed "Ne" was approximately 1000 rpm or the like). An ignition, which is capable of initiating combustion, was carried out one time by one kicking action (at time t4), and because, prior to this ignition, the fuel injection was carried out one or more times (two times in this example), and the fuel pressure was equal to or greater than a predetermined fuel pressure (e.g., 100 kPa or the like) during fuel injection, at least one opportunity, at which combustion can be initiated, is ensured; therefore, the internal combustion engine reliably started by executing a relatively weak kicking just one time.

As explained above, according to the vehicle electrical power supply apparatus 10 of the present embodiment, in a vehicle including, for example, an alternating current generator 11 that is capable of rotating a crankshaft of an internal combustion engine and is capable of generating electrical power by the kicking action of an operator, in addition to a starting motor that is capable of rotating the crankshaft by electrical power supplied from a battery 16, it is possible to start the internal combustion engine reliably.

Furthermore, by accumulating in the capacitor 33 of the rectifier/voltage control circuit 12 direct current waveform power, which is the rectified alternating current waveform power generated by a kicking action, it is possible to stably supply electric power from the capacitor 33 to the fuel supply system 70.

### INDUSTRIAL APPLICABILITY

The present invention provides a vehicle electrical power supply apparatus. According to the vehicle electrical power supply apparatus of the present invention, it is possible to activate the fuel injection device by generated electric power output from an alternating current generator due to the kicking action of the operator or the like. In addition, according to the vehicle electrical power supply apparatus of the present invention, it is possible to further improve the electric power supply by supplying electric power from the capacitor to the fuel supply system that includes, for example, the control device that controls the fuel supply and the fuel injection device. Furthermore, it is possible to prevent supply of generated electric power output to the battery from the alternating current generator depending on the kicking action of the operation or the like, and to operate the fuel injection device by the generated electrical power output from the alternating current generator.

## Claims

1. A vehicle electrical power supply apparatus installed in a vehicle including: an internal combustion engine, as a drive source, having a fuel injection device; and an electrical load; the vehicle electrical power supply apparatus comprising:
a battery that supplies electrical power to the electrical load;
an alternating current generator that charges the battery with electrical power and supplies electrical power to the electrical load; and
an electrical power supply device that supplies electrical power output from the alternating current generator to the fuel injection device so as to operate the fuel injection device.

2. A vehicle electrical power supply apparatus installed in a vehicle including an internal combustion engine, as a drive source; and an electrical load; the vehicle electrical power supply apparatus comprising:
a battery that supplies electrical power to the electrical load;
an alternating current generator that charges the battery with electrical power and supplies electrical power to the electrical load; and
a capacitor that accumulates the electrical power output from the alternating current generator during a kicking start-up operation in which the alternating current generator is rotated by a kicking action of an operator.

3. A vehicle electrical power supply apparatus installed in a vehicle including: an internal combustion engine, as a drive source, having a fuel injection device; and an electrical load; the vehicle electrical power supply apparatus comprising:
a battery that supplies electrical power to the electrical load;
an alternating current generator that charges the battery with electrical power and supplies electrical power to the electrical load;
an interrupt device that interrupts the supply of electrical power from the alternating current generator to the battery when a state of charge of the battery does not attain a predetermined state; and
an electrical power supply device that supplies electrical power output from the alternating current generator to the fuel injection device so as to operate the fuel injection device.
